# EUROPÄISCHE PATENTSCHRIFT

(11) **EP 2 524 856 B1**
(45) Veröffentlichungstag und Bekanntmachung des Hinweises auf die Patenterteilung: **02.07.2014**
(21) Anmeldenummer: 11166981.8
(22) Anmeldetag: 20.05.2011
(51) Int. Cl.: B62D 29/04, B62D 33/04, B62D 63/02

(54) **Aufbau für ein Nutzfahrzeug**
Superstructure for a commercial vehicle
Création pour un véhicule utilitaire

(43) Veröffentlichungstag der Anmeldung: 21.11.2012
(73) Patentinhaber: Schmitz Cargobull AG, 48341 Altenberge (DE)
(72) Erfinder: Schlumm, Michael, 48493, Wettringen (DE); Dorr, Christoph, 46514, Schermbeck (DE)
(74) Vertreter: Cohausz & Florack

(56) Entgegenhaltungen:
- DE-A1- 1 914 997
- DE-A1- 3 808 750
- US-A- 4 550 543

## Beschreibung

Die Erfindung betrifft einen Aufbau für ein Nutzfahrzeug, der mindestens eine Komponente aufweist, die aus miteinander verbundenen, separat vorgefertigten Modulen gebildet ist. Bei der derart zusammengesetzten Komponente kann es sich beispielsweise um eine Seitenwand, eine Stirnwand, ein Dach, eine Rückwand oder einen Boden handeln. Aus mehreren Komponenten dieser Art kann ein fester Aufbau zusammengesetzt werden, wie er beispielsweise für Kühltransporte oder andere Transporte empfindlicher Produkte benötigt wird.

In der Praxis haben sich zwei Wege der Fertigung und Montage von Aufbauten dieser Art etabliert. Zum einen werden die Aufbauten zentral in einem Werk des Herstellers gefertigt und dort auch auf das jeweilige Fahrzeugchassis montiert. Zum anderen werden die einzelnen Komponenten des Aufbaus vom Hersteller zu Bausätzen zusammengestellt und zu kleineren, dezentralen Montagewerkstätten geschickt, die sich in der Nähe des Standorts des jeweiligen Kunden befinden.

Während sich bei der zentralen Montage im Werk des Herstellers problemlos eine hohe Effektivität und konstante Qualität bei der Montage des Aufbaus sichern lässt, hat die dezentrale Montage von im Werk des Herstellers zusammengestellten Bausätzen den Vorteil, dass bei minimiertem logistischen Aufwand und dementsprechend verminderten Kosten problemlos auch Kunden an weit entfernten Standorten beliefert werden können.

Ein für diesen Zweck bestimmter Bausatz für einen Kofferaufbau ist beispielsweise in der gattungsgemäßen EP 0 607 575 A1 beschrieben. Um bei diesem Bausatz eine möglichst einfache Montage zu ermöglichen, sind die Einzelkomponenten "Wände" und "Decken" modular aus Wandelementen zusammengesetzt, die jeweils eine maximale Breite von etwa 1,5 m aufweisen. Ebenso ist der Boden des Aufbaus aus Bodenwandelementen zusammengesetzt, die jeweils eine maximale Breite von etwa 1,5 m aufweisen. Zusätzlich umfasst der bekannte Bausatz Einfassprofile zur Klebeverbindung der aus den Wand- bzw. Boden- und Deckenwandelementen gebildeten Wand-, Decken- oder Bodenkomponenten. Die in ihren Abmessungen derart beschränkten Einzelteile lassen sich mit einem Gabelstapler transportieren und am Montageort von den Monteuren handhaben, ohne dass dafür ein besonders leistungsfähiger Kran oder desgleichen benötigt wird. Um dabei das Zusammenfügen der einzelnen Wandelemente zu jeweils einer Seitenwand oder Decke zusätzlich zu vereinfachen, weisen die Wandelemente an ihrer einen Schmalseite jeweils eine Stegleiste und an ihrer gegenüber liegenden Schmalseite eine korrespondierend geformte Aufnahme auf. Die Stegleisten und die Aufnahmen sind dabei so aufeinander abgestimmt, dass die Stegleisten in den Aufnahmen verrasten und auf diese Weise dort sicher formschlüssig gehalten sind.

Die erforderliche Formsteifigkeit erhält der aus dem bekannten Bausatz gebildete Bausatz durch einen aus mehreren Profilen zusammengesetzten Grundrahmen. Die Profile können aus mehreren Einzelteilen zusammengesetzt sein und erstrecken sich über die gesamte Länge des jeweiligen Aufbaus. Sie verbinden die durch die Wandelemente jeweils gebildeten Komponenten "Dach", "Seitenwände", "Stirn-" und "Rückwand" fest miteinander.

Dazu weisen die Profile an ihrer einen Längsseite jeweils eine sich über die gesamte Länge der ersten Komponente erstreckende erste Aufnahme auf, in die die Wandelemente der ersten Komponente mit ihrem der jeweiligen zweiten Komponente zugeordneten Randbereich eingeklebt werden. Zusätzlich besitzen die Profile eine zweite Aufnahme, die sich ebenfalls über die gesamte Länge der ersten Komponente erstreckt und in die die Wandelemente der zweiten Komponente mit ihrem der ersten Komponente zugeordneten Randbereich eingeklebt sind. Der Halt der Wandelemente in den Aufnahmen der Profile kann zusätzlich durch Verschraubungen unterstützt werden.

Vor dem Hintergrund des voranstehend erläuterten Standes der Technik bestand die Aufgabe der Erfindung darin, einen zur Versendung als Bausatz besonders geeigneten Aufbau der eingangs angegebenen Art so weiterzubilden, dass er mit weiter verringertem Aufwand hergestellt, transportiert und montiert werden kann.

Diese Aufgabe ist erfindungsgemäß durch einen Aufbau gelöst worden, der durch die in Anspruch 1 angegebenen Merkmale gekennzeichnet ist. Vorteilhafte Ausgestaltungen eines erfindungsgemäßen Aufbaus sind in den abhängigen Ansprüchen angegeben und werden wie die Lehre des Anspruchs 1 nachfolgend erläutert.

Die Erfindung basiert auf dem Gedanken, Komponenten (d.h. die Wände, Dach und Boden) für einen Aufbau eines Transportfahrzeugs aus Modulen zusammenzusetzen, die über an den Modulen vorhandene Anlageflächen miteinander so fest verbunden sind, dass der aus den Komponenten jeweils zusammengesetzte Aufbau ohne Zuhilfenahme weiterer Bauteile, wie Längsträger, Aussteifungselemente oder Grundrahmen, ausreichend formsteif ist.

Ein erfindungsgemäßer Aufbau ist dabei wie die bekannten Aufbauten in erster Linie für Nutzfahrzeuge bestimmt. Er umfasst mindestens eine Komponente, die aus miteinander verbundenen, separat vorgefertigten Modulen gebildet ist. Bei der betreffenden Komponente kann es sich in an sich ebenfalls bekannter Weise um eine Seitenwand, eine Stirnwand, ein Dach, eine Rückwand oder einen Boden des jeweiligen Fahrzeugaufbaus handeln.

Erfindungsgemäß liegt nun jedes Modul der jeweils aus den Modulen gebildeten Komponente mit jeweils einer Anlagefläche direkt an einer Anlagefläche eines benachbart angeordneten Moduls an.

Gleichzeitig sind aneinander angrenzende Module ausschließlich im Bereich ihrer direkt aneinander liegenden Anlageflächen fest miteinander verbunden.

Dies erlaubt es, dass die Module der aus den Modulen gebildeten Komponente mit ihren Aussteifungen erfindungsgemäß gemeinsam einen in mehrere Teilstücke untergliederten Rahmen bilden, an dem die an die aus den Modulen gebildete Komponente jeweils unmittelbar anstoßende Komponente abgestützt ist. Im Ergebnis benötigt ein erfindungsgemäßer Aufbau daher zumindest im Bereich der durch die erfindungsgemäßen Module gebildeten Komponente keine zusätzlichen, separat zu montierenden Rahmenteile, die die einzelnen Module und Komponenten des Aufbaus tragen.

Bei einem erfindungsgemäßen Aufbau sind also sowohl die Module einer Komponente jeweils direkt, d. h. ohne Zwischenschaltung von zusätzlichen Verbindungsmitteln miteinander verkoppelt. Die benachbart zueinander angeordneten Module einer Komponente stoßen dementsprechend jeweils unmittelbar aneinander und sind im Bereich ihrer einander berührenden Anlageflächen unmittelbar miteinander verbunden. Um diese direkte Verbindung herzustellen, können an den Anlageflächen der Module zueinander korrespondierend geformte Formelemente vorhanden sein, die formschlüssig ineinander greifen und gegenseitig die feste Verbindung zwischen den Modulen sichern. Darüber hinaus können konventionelle Verbindungsmittel, wie Schrauben, Klammern, Nieten oder desgleichen verwendet werden, um die aneinander stoßenden Anlageflächen benachbarter Module fest miteinander zu verbinden.

Zusätzliche Profile, Winkel oder vergleichbare Konstruktionselemente, wie sie beim Stand der Technik zur Versteifung des Aufbaus noch benötigt werden, sind bei einem erfindungsgemäßen Aufbau nicht erforderlich. Der Verzicht auf ergänzende Verbindungselemente ist erfindungsgemäß dadurch möglich, dass jedes einzelne Modul für sich gesehen so ausgesteift ist, dass die aus den Modulen zusammengesetzte Komponente im Zusammenspiel mit den an ihnen abgestützten anderen Komponenten des Aufbaus eine insgesamt allen Anforderungen gerecht werdende Formsteifigkeit gewährleisten, ohne dass dazu eine zusätzliche, separate Rahmenkonstruktion erforderlich ist. Im fertig zusammengesetzten Zustand bilden vielmehr die einzelnen Module der aus ihnen jeweils zusammengesetzten Komponente gemeinsam einen Rahmen, der in mindestens zwei den Abmessungen der Module entsprechende, fest miteinander verbundene Teilstücke untergliedert ist und so den Zusammenhalt des Gesamtaufbaus unter allen im praktischen Einsatz auftretenden Kräften sichert.

Mit der Erfindung steht somit ein Aufbau zur Verfügung, der sich auf einfache Weise in Einzelteilen zerlegt transportieren und unkompliziert montieren lässt. Dies ergibt sich daraus, dass bei einem erfindungsgemäßen Aufbau zumindest im Bereich der aus den Modulen in erfindungsgemäßer Weise gebildeten Komponente keine zusätzlichen separaten Rahmenteile mehr erforderlich sind, sondern die Formsteifigkeit durch die jeweils für sich ausreichend ausgesteiften und direkt miteinander verbundenen Module der jeweiligen Komponente gewährleistet ist.

Besonders vorteilhaft erweist sich die Erfindung dann, wenn nicht nur die Module einer jeweiligen Komponente, sondern die aus den Modulen gebildete Komponente mit jeweils einer Anlagefläche ihrer Module direkt an einer korrespondierenden Anlagefläche einer benachbarten Komponente anliegt und die beiden aneinander anliegenden Komponenten ausschließlich im Bereich der Anlageflächen fest miteinander verbunden sind. Bei dieser Ausgestaltung der Erfindung wird auch für die Verbindung zwischen der aus den Modulen gebildeten Komponente und der an ihr anliegenden Komponente kein zusätzliches Rahmenprofil oder desgleichen benötigt. Stattdessen sind die aneinander liegenden Komponenten direkt über ihre dicht zusammengefügten Anlageflächen verbunden und die Module der mindestens einen aus den Modulen gebildeten Komponente bilden gemeinsam einen in mehrere Teilstücke unterteilten Rahmen, an dem die jeweils andere Komponente sicher abgestützt ist.

Indem die mindestens eine Komponente eines Fahrzeugaufbaus in erfindungsgemäßer Weise aus zwei oder mehr Modulen zusammengesetzt ist, lässt sich nicht nur die Zahl der für die Herstellung eines solchen Aufbaus benötigten Teile verringern, sondern es ist auch möglich, die Abmessungen der jeweiligen Komponente auf einfache Weise an die Abmessungen des Fahrzeugchassis anzupassen, auf dem der Aufbau montiert wird. So kann die Länge der jeweiligen Komponente unkompliziert dadurch an die Länge des jeweiligen Chassis angepasst werden, dass sich erfindungsgemäße Module, deren in Längsrichtung des Fahrzeugs gemessene Länge sich unterscheidet, so aneinandergereiht werden, dass die Summe ihrer Längen jeweils mindestens gleich der Länge der an dem Chassis für die Montage des Aufbaus vorgesehenen Tragkonstruktion und höchstens gleich der Maximallänge ist, die sich aus der gesetzlich zugelassenen Maximallänge des jeweiligen Transportfahrzeugs ergibt. Die unterschiedlichen Längen der Module erlauben es dabei, durch Kombination verschiedener Module eine große Bandbreite von Chassislängen abzudecken. Besonders einfach lässt sich dies dadurch bewerkstelligen, wenn die jeweilige Komponente aus mindestens drei Modulen zusammengesetzt ist, von denen mindestens zwei eine unterschiedliche Länge aufweisen. In diesem Fall weisen mindestens zwei Module eine gleiche Länge auf. Das zusätzliche Modul dient dann dazu, die Gesamtlänge der aus den Modulen zusammengesetzten Komponente an die jeweils für die Montage zur Verfügung stehende Gesamtlänge des Fahrzeugchassis anzupassen.

Ein erfindungsgemäßer Aufbau eignet sich daher in besonderer Weise dazu, nach Art eines Bausatzes aus vorgefertigten Modulen zusammengesetzt zu werden. Diese Module können kostengünstig in standardisierten Abmessungen gefertigt am Montageort dann jeweils so miteinander kombiniert werden, wie dies zur optimalen Anpassung der Länge oder Breite des jeweiligen Aufbaus an die Abmessungen des mit dem Aufbau zu bestückenden Fahrzeugs erforderlich ist. Dementsprechend ist es durch die erfindungsgemäße Gestaltung eines Aufbaus mit einer minimalen Anzahl von Modulvarianten möglich, Aufbauten für eine maximale Anzahl von Nutzfahrzeugtypen zu fertigen, ohne dass es dazu besonderer, auf das jeweilige Fahrzeug speziell abgestimmter Bauteile bedarf.

Besonders deutlich wirkt sich der Nutzen der Erfindung selbstverständlich dann aus, wenn bei einem erfindungsgemäßen Aufbau mindestens zwei aneinander stoßende Komponenten aus jeweils mindestens zwei Modulen gebildet sind, wobei es besonders vorteilhaft ist, wenn mindestens die Stirnwand-, die Dach- und die Seitenwandkomponenten eines Kofferaufbaus in erfindungsgemäßer Weise ausgebildet und miteinander verbunden sind. Die dann jeweils aufeinander treffenden, aus den Modulen zusammengesetzten Komponenten sind dabei jeweils für sich so ausgesteift, dass sie im zusammengefügten, ausschließlich über ihre aneinander liegenden Anlageflächen direkt verbundenen Zustand einen formsteifen Aufbau bilden, ohne dass dazu ein separater Grundrahmen oder andere Verstärkungsprofile benötigt werden. So lässt sich insbesondere dann, wenn mindestens das Dach, die Seitenteile und gegebenenfalls auch die Stirnwand in erfindungsgemäßer Weise aus jeweils für sich ausgesteiften und über ihre aneinander liegenden Anlageflächen ausschließlich direkt miteinander verbundenen Modulen gebildet sind, ohne eine zusätzliche Stütz- oder Rahmenkonstruktion ein formstabiler Aufbau schaffen, der allen in der Praxis auftretenden Belastungen sicher standhält.

Genauso wie im Fall eines Kofferaufbaus die Wände und das Dach in erfindungsgemäßer Weise aus Modulen gebildet sein können, kann auch der Boden eines Aufbaus für ein Nutzfahrzeug allgemein in erfindungsgemäßer Weise aus einzeln separat vorgefertigten Modulen gebildet sein, die für sich ausgesteift und ausschließlich über ihre Anlageflächen mit einem jeweils an ihnen anliegenden anderen Modul verbunden sind. Die den Längsseiten des Aufbaus zugeordneten Anlageflächen der einzelnen Module des Bodens bilden dann gemeinsam ein in mehrere Abschnitte unterteiltes Rahmenprofil. An diesem können dann Anbauteile, wie eine Seitenwandkomponente oder eine Ladebordwand, befestigt werden, ohne dass dazu ein separates Profil- oder sonstiges Konstruktionselement benötigt wird.

Die Einteilung der in Längsrichtung der jeweiligen Komponente gemessenen Länge der Module folgt vorteilhafterweise einem Raster, das jeweils maximal vier Modullängen umfasst. So hat sich gezeigt, dass sich mit vier Modulvarianten eine maximale Anzahl von jeweils optimal an die Längenvorgaben des jeweiligen Nutzfahrzeugs angepasster Aufbau erstellen lässt. Für die Module, die gemeinsam eine Seitenwand-, Rückwand-, Stirnwand-, Decke- oder Bodenkomponente eines erfindungsgemäßen Aufbaus bilden gilt dann,
- die Summe der in Längsrichtung der jeweiligen Komponente gemessenen Länge der Module ist mindestens so groß wie die mindestens erforderliche korrespondierende Länge des den Aufbau tragenden Abschnitts des Fahrzeugchassis,
- die Summe der Längen der Module der jeweiligen Komponente ist höchstens gleich der maximal zulässigen korrespondierenden Länge des Aufbaus, und
- es sind mindestens zwei Module mit unterschiedlicher Länge vorhanden, um die Länge der jeweiligen Komponente an die jeweils erforderliche bzw. zulässige korrespondierende Länge anzupassen.

Im Fall, dass mehrere Komponenten in erfindungsgemäßer Weise aus Modulen zusammengesetzt sind und diese Komponenten aneinander stoßen, ergibt sich eine besonders hohe Steifigkeit des Aufbaus dann, wenn mindestens eine der Stoßlinien, an denen die Module einer Komponente aneinander stoßen, gegenüber der ihr nächstbenachbarten Stoßlinie einer angrenzenden Komponente versetzt angeordnet ist. Die versetzte Anordnung der Stoßlinien verhindert sicher, dass sich um den Aufbau umlaufende Bruch- bzw. Knicklinien ausbilden, an denen sich der Aufbau bei entsprechender Belastung verformt. Bei versetzter Anordnung genügt daher gegebenenfalls die eine weniger starke Aussteifung der Module, um die erforderliche Gesamtsteifigkeit des Aufbaus zu gewährleisten.

Eine im Hinblick auf die Effektivität der angestrebten Aussteifung der Module besonders günstige und gleichzeitig auf einfache Weise herzustellende und zu montierende Ausgestaltung der Erfindung ist dadurch gekennzeichnet, dass die Module zur Aussteifung einen in ihrem Randbereich umlaufenden Rahmen aufweisen. Dieser Rahmen ist dabei optimaler Weise so ausgebildet, dass an seinen frei liegenden seitlichen Schmalseiten jeweils eine Anlagefläche zum Anfügen eines angrenzend angeordneten Moduls oder einer angrenzend angeordneten Komponente gebildet ist.

Um auf einfache Weise eine feste, lagerichtige Verbindung der Module untereinander zu bewerkstelligen, können an den Anlageflächen Formelemente ausgebildet sein, die mit korrespondierend geformten Formelementen der Anlagefläche des jeweils angrenzenden Moduls formschlüssig zusammenwirken. Alternativ oder zusätzlich kann die feste Verbindung der Module zudem durch eine kraftschlüssige Verkopplung hergestellt werden, wozu Verbindungselemente, wie Schrauben, Nieten, Klammern oder desgleichen verwendet werden können. Um ein Modul nachträglich auf einfache Weise aus dem die jeweilige Komponente bildenden Modulverbund herauslösen zu können, werden zu diesem Zweck optimaler Weise lösbare Verbindungselemente der voranstehend genannten Art eingesetzt.

Ein besonderer Vorteil der Erfindung besteht darin, dass aufgrund dessen, dass keine zusätzlichen Konstruktionsteile für die Verbindung zwischen den Modulen einer Komponente des Aufbaus erforderlich sind, die Verbindung zwischen den Modulen einer Komponente oder der Komponenten untereinander so ausgebildet werden kann, dass die einzelnen Module nachträglich aus dem Gesamtverband der die jeweilige Komponente bildenden Module herausgelöst werden kann. Hierzu müssen lediglich die die direkte Verbindung zwischen den Anlageflächen der aneinander anliegenden Module sichernden Verbindungsmittel gelöst werden. Anschließend kann dann das jeweils auszutauschende bzw. in Stand zu setzende Modul aus der betreffenden Komponente herausgenommen werden. Genauso einfach ist es, ein neues Modul an den Platz eines beschädigten, zuvor aus der jeweiligen Komponente ausgebauten Moduls zu setzen. Besonders leicht ist dies dann möglich, wenn die Module nach Art von quaderförmigen Flächenpaneelen ausgebildet sind.

Gemäß einer in dieser Hinsicht zur Umsetzung des der Erfindung zu Grunde liegenden Baukastenprinzips zusätzlich beitragenden Ausgestaltung der Erfindung ist die Verbindung zwischen den Modulen einer Komponente jeweils gleich ausgebildet. Vorteilhafterweise gilt dies jedoch nicht nur für die Verbindung der Module einer Komponente untereinander, sondern auch für die Verbindung der aneinanderstoßenden Komponenten des Aufbaus gleichermaßen. Auch die Verbindung der Komponenten untereinander sollte so erfolgen, wie die Verbindung der Module einer Komponente. Auf diese Weise lassen sich die hinsichtlich der Ausgestaltung ihrer Anlageflächen und Verbindungsoptionen jeweils gleich ausgebildeten Module an jeder Stelle des Aufbaus in gleicher Weise einsetzen.

Hierzu erweist es sich zusätzlich als nützlich, wenn mindestens die quer zur Längsrichtung der jeweiligen Komponente ausgerichteten Anlageflächen der Module unter jeweils einem von 90° abweichenden Winkel, insbesondere unter einem Winkel von 45°, gegenüber der Längsrichtung der jeweiligen Komponente ausgerichtet sind. Die derart schräge Ausrichtung der Anlageflächen erlaubt es nicht nur, die Module jeweils so miteinander zu verbinden, dass sich jeweils eine flache Wand-, Dach- oder Bodenkomponente ergibt, sondern es können auf diese Weise auch besonders einfach Eckverbindungen des Aufbaus ohne zusätzliche Hilfsmittel durch eine direkte Verkopplung der in dem jeweiligen Eckbereich aneinander stoßenden Module der dort jeweils aufeinander treffenden Komponenten ausgebildet werden. Soll diese Möglichkeit nicht nur für die in vertikaler Richtung sich erstreckenden Eckbereiche, also beispielsweise die Verbindung zwischen den Seitenwand- und der Stirnwand-Komponenten eines Kofferaufbaus gelten, sondern auch für die in horizontaler Richtung sich erstreckende Verbindung zwischen einer Dachkomponente und den an sie stoßenden Seitenwandkomponenten, so lässt sich dies dadurch bewerkstelligen, dass die parallel zur Längsrichtung der jeweiligen Komponente ausgerichteten Anlageflächen der Module unter jeweils einem von 90° abweichenden Winkel gegenüber der Querrichtung der jeweiligen Komponente ausgerichtet sind. Sind die aneinander stoßenden Komponenten gleich dick, erweist es sich dabei als zweckmäßig, wenn der Winkel, unter dem die Anlageflächen schräg ausgerichtet sind, jeweils 45° beträgt. Sollen dagegen unterschiedlich dicke Komponenten miteinander verbunden werden, kann es zweckmäßig sein, die einander zugeordneten Anlageflächen unter unterschiedlichen Winkeln schräg auszurichten, wobei die Summe der Winkel bei einer rechtwinkligen Anordnung der aufeinander treffenden Komponenten jeweils 90° beträgt.

Zur Abdichtung der Stoßfugen, an denen die Komponenten eines erfindungsgemäßen Aufbaus gegeneinander stoßen, kann ein aus einem elastischen Werkstoff hergestelltes Profil vorgesehen sein, dass die betreffenden Stoßfugen abgedeckt. Dieses Profil kann dabei so ausgelegt sein, dass es die Stoßfugen auch optisch so abdeckt, dass im Bereich der jeweiligen Kante oder Stoßlinie der Eindruck einer gleichmäßigen, durchgehenden Gestaltung der jeweiligen Komponente entsteht. Dazu kann sich ein Profil jeweils über die gesamte Länge der jeweiligen Komponente erstrecken. Genauso können auch die im Bereich einer Eckverbindung vorhandenen Kanten durch ein entsprechendes Profil abgedeckt sein. Die Abdeckprofile können aus einem Elastomer hergestellt sein. Auch die der Unterseite des Fahrzeugchassis zugeordneten Ränder der aus den Modulen in erfindungsgemäßer Weise zusammengesetzten Komponenten können durch ein entsprechendes Profil abgedeckt sein. Dieses kann in diesem Fall als Anfahrschutz dienen. Die Abdeckprofile können zusätzlich dazu genutzt werden, Leitungen zu führen, die beispielsweise zur Versorgung von elektrischen Verbrauchern oder als Signalleitungen benötigt werden.

Die einzelnen Komponenten können vor dem Zusammenbau des Aufbaus aus den Modulen zusammengesetzt werden oder der Aufbau wird modulweise zusammengesetzt. Während bei der ersten Montagevariante die einzelnen Komponenten in einem vorgeschalteten Arbeitsgang zusammengesetzt und anschließend die vorgefertigten Komponenten zu dem Aufbau zusammengefügt werden, findet eine solche Vorfertigung bei der zweiten Variante nicht statt. Stattdessen wird dort der Aufbau direkt am Fahrzeug Stück für Stück aus den Modulen zusammengesetzt.

Nachfolgend wird die Erfindung anhand einer ein Ausführungsbeispiel darstellenden Zeichnung näher erläutert. Es zeigen:
- Fig. 1: ein Nutzfahrzeug mit einem Kofferaufbau in perspektivischer Ansicht;

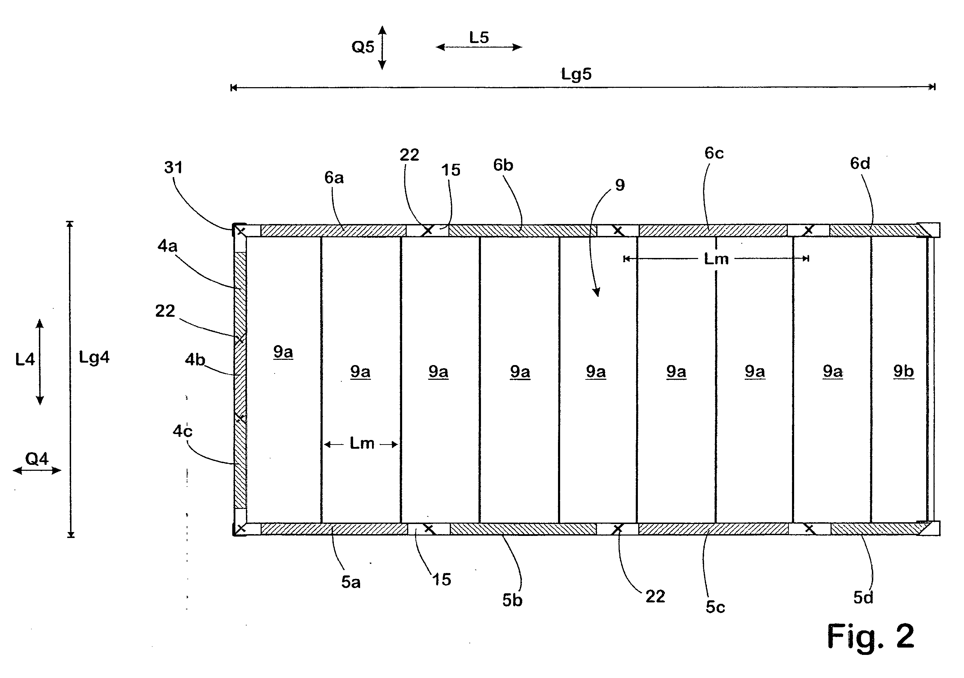

- Fig. 2: den Kofferaufbau des in Fig. 1 dargestellten Nutzfahrzeugs in einem Horizontalschnitt;

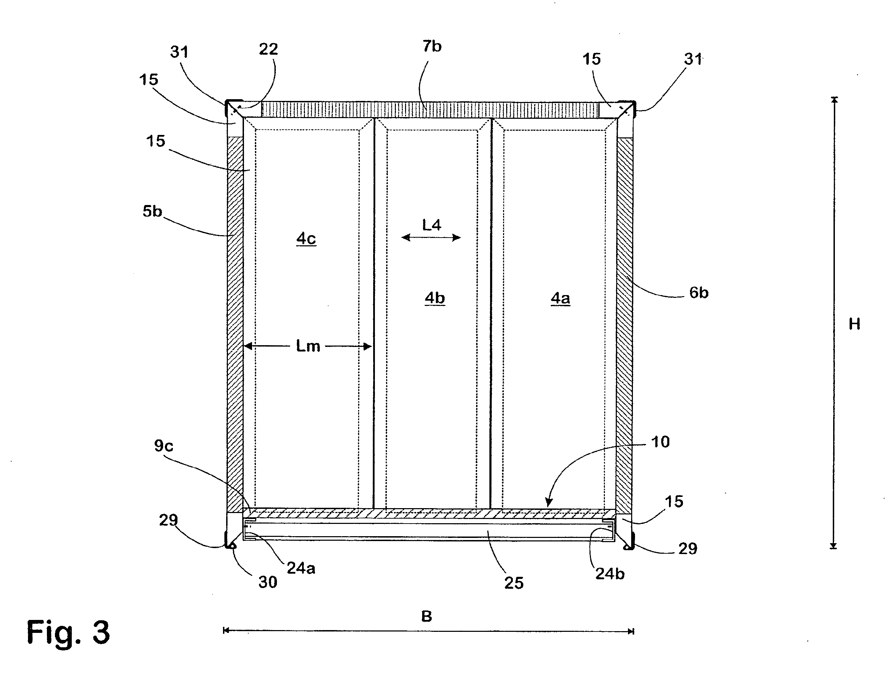

- Fig. 3: den Kofferaufbau in einem Vertikalschnitt quer zur Längsachse des Nutzfahrzeugs;

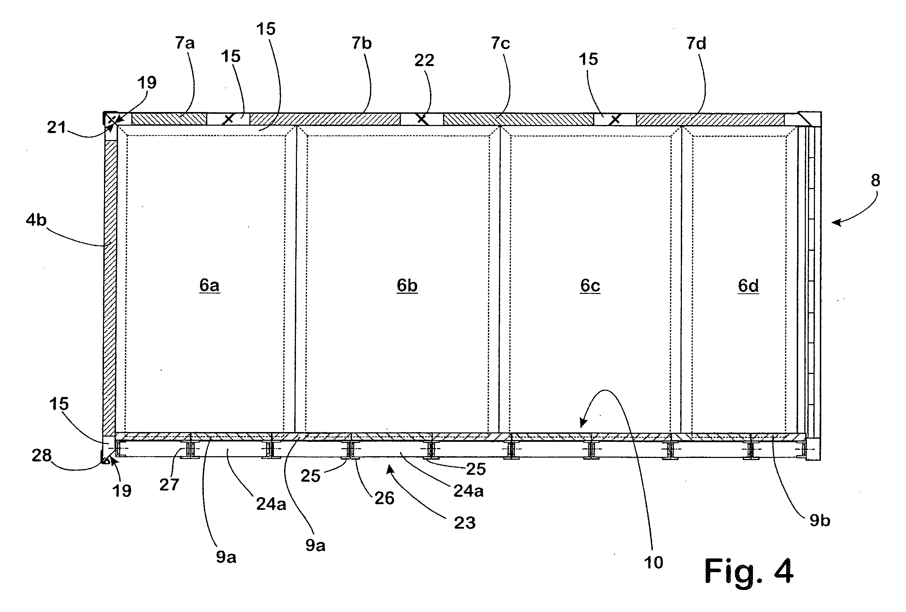

- Fig. 4: den Kofferaufbau in einem Vertikalschnitt längs der Längsachse des Nutzfahrzeugs;

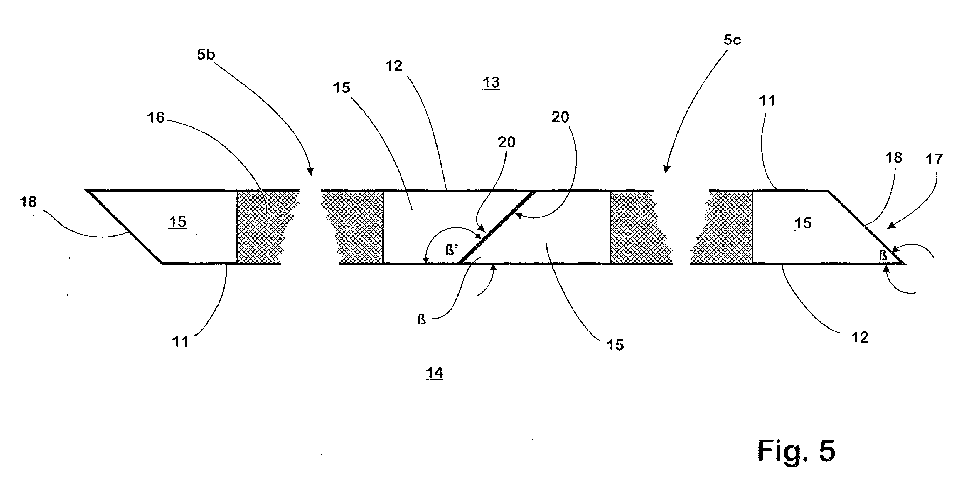

- Fig. 5: die Verbindung zwischen zwei Modulen einer Wand-Komponente des Kofferaufbaus in einer Querschnittdarstellung.

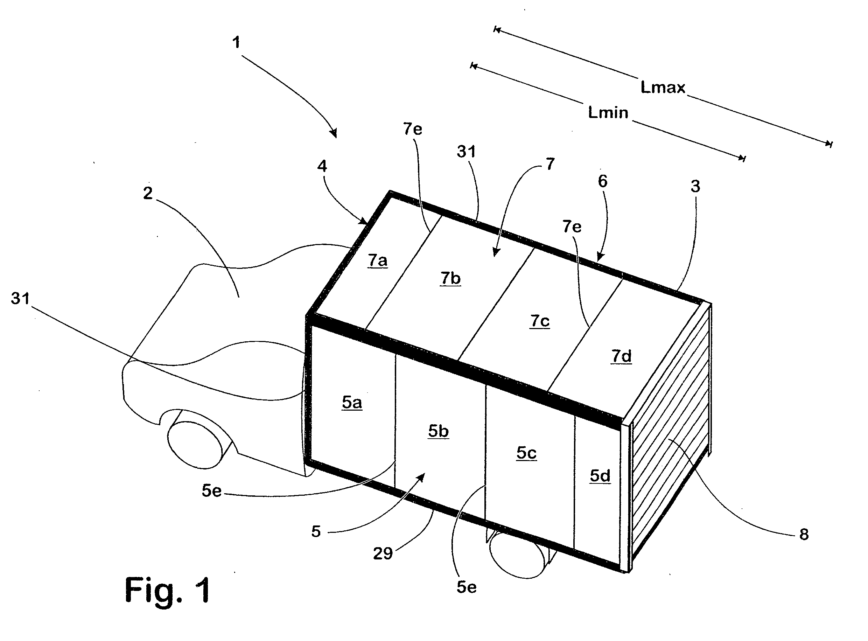

Bei dem in Fig. 1 dargestellten Nutzfahrzeug 1 handelt es sich beispielsweise um einen konventionellen Transporter, auf dessen hier nicht näher dargestellten Chassis frontseitig das den Antriebsmotor und die Kabine aufnehmende Fahrerhaus 2 und daran anschließend ein als Kofferaufbau ausgebildeter Aufbau 3 montiert ist. Der Aufbau 3 ist auf den hier ebenfalls nicht gezeigten Längsträgern des Chassis des Nutzfahrzeugs 1 abgestützt.

Der Aufbau 3 weist eine Kastenform auf und ist aus den Komponenten "Stirnseite 4", "Seitenwände 5,6", "Dach 7" und "Rückwand 8" zusammengesetzt. Zusätzlich umfasst der Aufbau 3 einen Boden 9, der über Querträger auf den nicht gezeigten Längsträgern des Chassis montiert ist und dessen Oberseite eine Ladefläche 10 für das jeweils zu transportierende Gut bildet.

Die Komponenten 4,5,6 und 7 des Aufbaus 3 sind jeweils aus gleichartig aufgebauten Modulen 4a - 4c, 5a - 5d, 6a - 6d und 7a - 7d zusammengesetzt. Jedes der Module 4a - 7d weist nach Art eines Paneels ebene, rechteckig geformte Seitenflächen 11,12 auf, von denen jeweils eine dem von dem Aufbau 3 umschlossenen Innenraum 13 und eine der Umgebung 14 des Aufbaus 3 zugeordnet ist.

Die die Stirnseiten-Komponente 4 und die Seitenwand-Komponenten 5,6 bildenden Module 4a - 6d erstrecken sich jeweils über die Höhe H des Aufbaus 3, während ihre in Längsrichtung L4, L5 der jeweiligen Komponente 4 - 7 gemessene Länge Lm jeweils einem Bruchteil der Gesamtlänge Lg4, Lg5 der betreffenden Komponente 4 - 6 entspricht. Die Länge Lg4 der Stirnwand-Komponente 4 entspricht dabei der Breite B des Aufbaus 3.

Die Module 7a - 7d der Dach-Komponente 7 erstrecken sich dagegen zwischen den Seitenwand-Komponenten 5,6 über die Breite B des Aufbaus 3. Ihre ebenfalls in Längsrichtung L5 der Komponenten 5,6 gemessene jeweilige Länge Lm entspricht dabei ebenfalls einem Bruchteil der Länge Lg5. Die Module 5a - 6d der Seitenwand-Komponenten 5,6 und die Module 7a - 7d der Dach-Komponente 7 sind unter Berücksichtigung ihrer jeweiligen Länge Lm so angeordnet, dass die Stoßlinien 5e,6e,7e, an denen die Module 5a - 7d der jeweiligen Komponente 5 - 7 aneinander stoßen, jeweils versetzt zu den Stoßlinien 5e,6e,7e der angrenzenden Komponente 5 - 7 ausgerichtet sind.

Dazu sind die Seitenwand-Komponenten 5,6 beginnend mit ihrer dem Fahrerhaus 2 zugeordneten Kante jeweils aus drei gleichlangen und gleichhohen Modulen 5a - 5c, 6a - 6c sowie einem weiteren Modul 5d,6d zusammengesetzt. Die Länge Lm dieses Moduls 5d,6d ist kürzer als die Länge Lm der anderen Module 5a - 6c, um die Gesamtlänge Lg5 der durch die Module 5a - 6d gebildeten Komponenten 5,6 so anzupassen, dass sie größer ist als die für den Aufbau 3 minimal zur Verfügung stehende Länge Lmin der nicht gezeigten Längsträger des Fahrzeugchassis und kürzer als die unter Berücksichtigung der vom Fahrerhaus 2 nach den gesetzlichen Vorschriften noch zur Verfügung stehenden maximal zulässigen Länge Lmax des Aufbaus 3.

Demgegenüber ist bei der Dach-Komponente 7 angrenzend an die Stirnseite 4 des Aufbaus 3 das Modul 7a angeordnet, dessen Länge Lm gleich der Länge Lm der Module 5d,6d und damit kürzer ist als die Länge Lm der an die Stirnseite 4 angrenzenden Module 5a,6a der Seitenwand-Komponenten 5,6. An das Modul 7a schließen sich drei Module 7b - 7d an, deren Länge Lm gleich der Länge Lm der Module 5a - 5c bzw. 6a - 6c ist. Im Ergebnis ist auf diese Weise bei versetzt zueinander angeordneten Stoßlinien 5e,6e und 7e der Seitenwand- und der Dach-Komponenten 5,6,7 die Gesamtlänge der Dach-Komponente 7 gleich der Gesamtlänge Lg5 der Seitenwand-Komponenten 5,6. Durch Variation der Längen Lm der verschiedenen Module 5a - 7d kann so die jeweilige Gesamtlänge Lg5 des Aufbaus 3 an das durch die Chassis-Länge Lmin und die maximal zulässige Länge Lmax begrenzte Längenfenster angepasst werden.

Demselben Prinzip folgend weisen das Modul 4b eine geringere Länge Lm auf als die beiden anderen Module 4a,4c der Stirnwand-Komponente 4, um die Gesamtlänge Lg4 der Stirnwand-Komponente 4 an die jeweils zulässige Breite B des Aufbaus 3 anzupassen.

Die Abmessungen H und Lm der Module 4a - 7d folgen einem Raster, dessen Schrittweiten beispielsweise so aufeinander abgestimmt sind, dass unter Berücksichtigung der Abmessungen heute zur Verfügung stehender FahrzeugChassis durch eine Kombination von jeweils maximal vier unterschiedlichen Modultypen sämtliche derzeit geforderten Abmessungen von Aufbauten abgedeckt werden können.

Ihre Formsteifigkeit erhalten die Module 4a - 4d durch jeweils einen in ihrem Randbereich umlaufenden Rahmen 15, der beispielsweise aus vorgefertigten, rechtwinklig zueinander ausgerichteten Metallprofilen zusammengesetzt ist. Das die Seitenflächen 11,12 bildende Material der Module 4a - 7c liegt dabei jeweils an den den Seitenflächen 11,12 zugeordneten Seiten des Rahmens 15 an, so dass die Rahmen 15 der Module 4a - 7d für den Betrachter des Aufbaus 3 weitestgehend unsichtbar sind. Der von dem Rahmen 15 und der die Seitenflächen 11,12 bildenden Materiallage umschlossene Raum ist mit einer wärmeisolierenden Schaumfüllung 16 ausgeschäumt.

Die umlaufenden freien Schmalseiten 17 des Rahmens 15 sind jeweils als Anlageflächen 18,19,20,21 ausgebildet, über die das jeweilige Modul 4a - 7d an das nächst benachbart angeordnete Modul 4a - 7d angeschlossen ist. Dabei sind die jeweils einander gegenüber liegenden Anlageflächen 18,20 und 19,21 der Module 4a - 7d jeweils so gegeneinander geneigt ausgerichtet, dass die quer zur jeweiligen Längsrichtung L4,L5 ausgerichteten Anlageflächen 18 - 21 unter einem Winkel von 45° zur betreffenden Längsrichtung L4,L5 ausgerichtet sind und die jeweils parallel zur jeweiligen Längsrichtung L4,L5 ausgerichteten Anlageflächen 18 - 21 ebenfalls gegeneinander geneigt einen Winkel von 45° mit der quer zur jeweiligen Längsrichtung L4,L5 ausgerichteten Richtung Q4,Q5 einschließen. Dementsprechend schließen die Anlageflächen 18 - 21 mit der einen ebenen Seitenfläche 12 jeweils einen Winkel β von 45 ° und mit der anderen ebenen Seitenfläche 11 jeweils einen Winkel β ' von 135° ein, so dass die Module 4 - 7 im Längs- und Querschnitt jeweils eine trapezförmige Querschnittsgestalt besitzen.

In Folge der schrägen Ausrichtung der Anlageflächen 18 - 21 kann durch wechselweise getauschte Anordnung der Module 4a - 7d jeweils eine flächige Komponente 4 - 7 gebildet werden. Genauso sind im Bereich der Stoßkanten, an denen die Komponenten 4 - 7 jeweils gegeneinander stoßen, die Module 4 - 7 mit ihren dort jeweils aneinander stoßenden Anlageflächen 18-21 so ausgerichtet, dass die unmittelbar benachbart zueinander angeordneten Module 4 - 7 auf Gehrung ausgerichtet sind und aneinander stoßenden Komponenten 4 - 7 einen Winkel von jeweils 90 ° einschließen.

An den Anlageflächen 18 - 21 sind hier nicht näher erläuterte und dargestellte Formelemente ausgebildet, über die die aneinander angrenzenden Module 4a - 7d formschlüssig miteinander verkoppelt sind. Die formschlüssige Verbindung ist dabei so gestaltet, dass sie beispielsweise durch Verschwenken des jeweiligen Moduls 4a - 7d nachträglich gelöst werden kann, wenn eines der Module 4a - 7d beispielsweise im Fall einer Beschädigung aus einer der Komponenten 4 - 7 herausgelöst werden soll. Zusätzlich sind die mit ihren einander zugeordneten Anlageflächen 18 - 21 direkt aneinander liegenden Module 4a - 7d über lösbare Schraubverbindungen 22 kraftschlüssig miteinander verbunden.

Im fertig montierten Zustand steifen die Rahmen 15 der Module 4a - 7d die durch sie gebildete Komponente 4 - 7 jeweils nach Art eines Fachwerks aus, so dass jede Komponente 4 - 7 von einem in mehrere Abschnitte gegliederten umlaufenden Rahmen umgeben ist. Dieser mehrgliedrige Rahmen ist so fest, dass an ihm abgestützte angrenzende Komponenten 4 - 7 trotz der ausschließlich über die direkt aneinander liegenden Anlageflächen 18 - 21 erfolgende Verkopplung sicher gehalten sind und eine ausreichende Steifigkeit des aus den Komponenten 4 - 7 und ihren Modulen gebildeten Gesamtverbunds 4a - 7d gesichert ist. Zusätzlicher Hilfsmittel, wie separat zu montierende Rahmen- oder Verbindungsteile, sind dazu nicht erforderlich.

Dem voranstehend für die Module 4a - 7d und die Komponenten 4 - 7 geschilderten Konzept folgend ist auch die Boden-Komponente 9 aus mehreren einzeln vorgefertigten Modulen 9a,9b zusammengesetzt. Die Module 9a,9b erstrecken sich jeweils parallel zu den Stirn- und Rückwand-Komponenten 4,8 über die Breite B des Aufbaus 3 und weisen bis auf eines alle die gleiche in Längsrichtung L5 gemessene Länge Lm auf. Lediglich das an die Rückwand 8 des Aufbaus 3 angrenzende Modul 9b der Boden-Komponente 9 weist eine kürzere Länge Lm auf, um die Gesamtlänge des Bodens 9 an die Länge Lg5 der Seitenwand-Komponenten 5,6 anzupassen.

Jedes der Module 9a,9b der Boden-Komponente 9 weist eine rechteckige Bodenplatte 9c auf, die von einem Rahmen 23 getragen ist. Der Rahmen 23 ist aus zwei Längsprofilabschnitten 24a,24b, von denen jeweils eines an der der Seitenwand-Komponente 5 bzw. 6 zugeordneten Längsseite der Bodenplatte 9c angeordnet ist, und zwei Querträger 25,26 auf, die sich über die Breite des Aufbaus 3 zwischen den Seitenwand-Komponenten 5,6 erstrecken. Bei den Querträgern 25,26 handelt es sich um im Querschnitt U-förmige Stahlprofile, auf deren einem Schenkel die Bodenplatte 9c liegt. Gleichzeitig ist die Basis senkrecht zur Bodenplatte 9c ausgerichtet, so dass an der Außenseite der Querträger 25,26 jeweils eine Anlagefläche gebildet ist, an der der Querträger 26,25 des jeweils benachbarten Moduls 9a,9b direkt anliegt. Über Verschraubungen 27 sind die aneinander anliegenden Module 9a,9b der Boden-Komponente 9 fest miteinander verbunden.

Die Module 4a - 6d der Stirn- und der Seitenwand-Komponenten 4,5,6 liegen jeweils flach an den ihnen zugeordneten Längsprofilabschnitten 24a,24b bzw. Querträgern 25 an und sind mit dem jeweiligen Längsprofilabschnitt 24a,24b bzw. Querträger 25 verschraubt. Die Komponenten 4,5,6 stehen dabei mit ihrer unteren Kante nach unten soweit über die Boden-Komponente 9 hinaus, dass sie vollständig verdeckt ist.

Auf die freie Unterkante 28 der Stirn- und Seitenwandkomponenten 4,5,6 ist eine aus einem elastischen Material bestehende Profilleiste 29 aufgesetzt, die sich durchgehend über die gesamte Länge Lg4,Lg5 der jeweiligen Komponente 4,5,6 erstreckt. Diese Profilleiste 29 dient einerseits als Schutz der Unterkante 28 und bewirkt zusätzlich einen einheitlichen Eindruck des Aufbaus 3 trotz des Umstandes, dass der Aufbau 3 aus einzelnen Modulen 4a - 7d zusammengesetzt ist. Dabei kann die Profilleiste 29 als Träger für eine elektrische Leitung 30 verwendet werden, für die an der Innenseite der Profilleiste 29 eine Halterung vorgesehen ist.

Ebenfalls zum Schutz und zur Verbesserung des optischen Eindrucks sind die Stoßkanten zwischen den Seitenwand-, Stirnwand- und Dachkomponenten 4,5,6,7 mit jeweils einem aus elastischen Material bestehenden Abdeckprofil 31 belegt, das sich jeweils über die Höhe H bzw. die Gesamtlänge Lg4,Lg5 der jeweiligen Komponente 4,5,6,7 erstreckt.

### BEZUGSZEICHEN

- 1: Nutzfahrzeug
- 2: Fahrerhaus des Nutzfahrzeugs 1
- 3: Aufbau des Nutzfahrzeugs 1
- 4: Stirnseiten-Komponente des Aufbaus 3
- 4a-7d: Module
- 5,6: Seitenwand-Komponente des Aufbaus 3
- 5e,6e,7e: Stoßlinien, an denen die Module 5a - 7d der jeweiligen Komponente 5 - 7 aneinander stoßen
- 7: Dach-Komponente des Aufbaus 3
- 8: Rückwand-Komponente des Aufbaus 3
- 9: Boden-Komponente des Aufbaus 3
- 9a,9b: Module der Boden-Komponente 9
- 9c: Bodenplatte der Boden-Komponente 9
- 10: Ladefläche
- 11,12: Seitenflächen der Module 4a-7d
- 13: Innenraum des Aufbaus 3
- 14: Umgebung des Aufbaus 3
- 15: Rahmen
- 16: Schaumfüllung
- 17: freie Schmalseiten des Rahmens 15
- 18-21: Anlageflächen der Module 4a - 7d
- 22: Schraubverbindungen
- 23: Rahmen der Boden-Komponente 9
- 24a,24b: Längsprofilabschnitt
- 25,26: Querträger
- 27: Verschraubungen
- 28: freie Unterkante der Stirn- und Seitenwandkomponenten 4,5,6
- 29: Profilleiste
- 30: elektrische Leitung
- 31: Abdeckprofil
- β, β': Winkel
- B: Breite des Aufbaus 3
- H: Höhe des Aufbaus 3
- L4,L5: Längsrichtungen der Komponente 4 - 7
- Lg4,Lg5: jeweilige Gesamtlänge der Komponente 4 - 6
- Lm: jeweilige Länge der Module 4a - 7d und 9a,9b
- Lmax: maximal für den Aufbau 3 zur Verfügung stehende Länge
- Lmin: minimal für den Aufbau 3 zur Verfügung stehende Länge
- Q4,Q5: quer zur jeweiligen Längsrichtung L4,L5 ausgerichtete Richtung

## Patentansprüche

1. Aufbau für ein Nutzfahrzeug, mit mindestens einer Komponente (4, 5, 6, 7, 9), wie einer Seitenwand (5,6), einer Stirnwand (4), einem Dach (7), einer Rückwand oder einem Boden (9), die aus miteinander verbundenen, separat vorgefertigten Modulen (4a-7a,9a,9b) gebildet ist,
- wobei jedes Modul (4a-7a,9a,9b) mit jeweils einer Anlagefläche (18-21) direkt an einer Anlagefläche eines benachbart angeordneten Moduls (4a-7a,9a,9b) anliegt,
- wobei die aneinander angrenzenden Module (4a-7a,9a,9b) im Bereich ihrer direkt aneinander liegenden Anlageflächen (18-21) fest miteinander verbunden sind,
- und wobei jedes Modul (4a-7a,9a,9b) in einem an seine jeweilige Anlagefläche (18-21) angrenzenden
Bereich ausgesteift ist, **dadurch gekennzeichnet,**
- **dass** die Module (4a-7a,9a,9b) der aus den Modulen (4a-7a,9a,9b) gebildeten Komponente (4,5,6,7,9) mit ihren Aussteifungen gemeinsam einen in mehrere Teilstücke untergliederten Rahmen bilden, an dem die an die aus den Modulen (4a-7a,9a,9b) gebildete Komponente (4,5,6,7,9) jeweils unmittelbar anstoßende Komponente abgestützt ist.

2. Aufbau nach Anspruch 1, **dadurch gekennzeichnet, dass** die aus den Modulen (4a-7a, 9a,9b) gebildete Komponente mit jeweils einer Anlagefläche (18-21) ihrer Module (4a-7a,9a,9b) direkt an einer korrespondierenden Anlagefläche (18-21) einer benachbarten Komponente (4,5,6,7,9) anliegt und **dass** die beiden aneinander anliegenden Komponenten (4,5,6,7,9) ausschließlich im Bereich der Anlageflächen (18-21) fest miteinander verbunden sind.

3. Aufbau nach einem der voranstehenden Ansprüche, **dadurch gekennzeichnet, dass** mindestens zwei aneinander stoßende Komponenten (4,5,6,7,9) aus jeweils mindestens zwei Modulen (4a-7a,9a,9b) gebildet sind.

4. Aufbau nach einem der voranstehenden Ansprüche, **dadurch gekennzeichnet, dass** jedes Modul (4a-7a, 9a,9b) zur Aussteifung einen in seinem Randbereich umlaufenden Rahmen (15,23) aufweist.

5. Aufbau nach Anspruch 4, **dadurch gekennzeichnet, dass** an den frei liegenden seitlichen Schmalseiten (17) des Rahmens (15) jeweils eine Anlagefläche (18-21) zum Anfügen eines angrenzend angeordneten Moduls (4a-7a,9a,9b) oder einer angrenzend angeordneten Komponente (4, 5, 6, 7, 9) gebildet ist.

6. Aufbau nach einem der voranstehenden Ansprüche, **dadurch gekennzeichnet, dass** in die Anlageflächen (18-21) ein Formelement zum formschlüssigen Verbinden des jeweiligen Moduls (4a-7a,9a,9b) mit einem angrenzend angeordneten Modul (4a-7a,9a,9b) oder einer angrenzend angeordneten Komponente (4,5,6,7,9) ausgebildet ist.

7. Aufbau nach einem der voranstehenden Ansprüche, **dadurch gekennzeichnet, dass** die jeweilige Komponente (4,5,6,7,9) aus mindestens drei Modulen (4a-7a,9a,9b) zusammengesetzt ist.

8. Aufbau nach Anspruch 7, **dadurch gekennzeichnet, dass** mindestens eines der Module (4a-7a,9a,9b) eine in Längsrichtung (L4,L5) der jeweiligen Komponente (4, 5, 6, 7, 9) gemessene Länge (Lm) aufweist, die sich von der Länge (Lm) der anderen Module (4a-7a,9a,9b) der jeweiligen Komponente (4,5,6,7,9) unterscheidet.

9. Aufbau nach einem der voranstehenden Ansprüche, **dadurch gekennzeichnet, dass** mindestens eine der Stoßlinien (5e,6e,7e), an denen die Module (4a-7a,9a,9b) einer Komponente (4,5,6,7,9) aneinander stoßen, gegenüber der ihr nächstbenachbarten Stoßlinie (5e,6e,7e) einer angrenzenden Komponente (4, 5, 6, 7, 9) versetzt angeordnet ist.

10. Aufbau nach einem der voranstehenden Ansprüche, **dadurch gekennzeichnet, dass** die Verbindung zwischen den Modulen (4a-7a,9a,9b) einer Komponente (4,5,6,7,9) jeweils gleich ausgebildet ist.

11. Aufbau nach einem der voranstehenden Ansprüche, **dadurch gekennzeichnet, dass** zumindest im Bereich der Seitenwand-Komponente (5,6) die Verbindung zwischen den Komponenten (4,5,6,7,9) des Aufbaus (3) gleich ausgebildet ist.

12. Aufbau nach einem der voranstehenden Ansprüche, **dadurch gekennzeichnet, dass** die Module (4a-7a,9a,9b) nach Art von quaderförmigen Flächenpaneelen ausgebildet sind.

13. Aufbau nach Anspruch 12, **dadurch gekennzeichnet, dass** die quer zur Längsrichtung (L4,L5) der jeweiligen Komponente (4,5,6,7,9) ausgerichteten Anlageflächen (18-21) der Module (4a-7a,9a,9b) unter jeweils einem von 90° abweichenden Winkel gegenüber der Längsrichtung (L4,L5) der jeweiligen Komponente (4, 5, 6, 7, 9) ausgerichtet sind.

14. Aufbau nach Anspruch 12 oder 13, **dadurch gekennzeichnet, dass** die parallel zur Längsrichtung (L4,L5)der jeweiligen Komponente (4,5,6,7,9) ausgerichteten Anlageflächen (18-21) der Module (4a-7a,9a,9b) unter jeweils einem von 90° abweichenden Winkel gegenüber der Querrichtung (Q) der jeweiligen Komponente (4,5,6,7,9) ausgerichtet sind.

15. Aufbau nach einem der voranstehenden Ansprüche, **dadurch gekennzeichnet, dass** die Stoßfugen oder Stoßkanten, an denen die Komponenten (4, 5, 6, 7, 9) gegeneinander stoßen, durch ein aus einem elastischen Werkstoff hergestelltes Profil (31) abgedeckt sind.

16. Aufbau nach Anspruch 15, **dadurch gekennzeichnet, dass** sich ein Profil (31) jeweils über die gesamte Länge (Lg4,Lg5) der jeweiligen Komponente (4,5,6,7,9) erstreckt.

## Claims

1. Body for a commercial vehicle having at least one component (4, 5, 6, 7, 9), such as a side wall (5, 6), a front wall (4), a roof (7), a back wall or a floor (9), which is formed of modules (4a-7a, 9a, 9b) which are prefabricated separately and joined together,
- wherein each module (4a-7a, 9a, 9b) abuts with a respective contact surface (18-21) directly on a contact surface of an adjacently arranged module (4a-7a, 9a, 9b),
- wherein the modules (4a-7a, 9a, 9b) adjoining one another are firmly joined together in the area of their directly abutting contact surfaces (18-21),
- and wherein each module (4a-7a, 9a, 9b) is reinforced in an area adjoining its respective contact surface (18-21), **characterised in that** the modules (4a-7a, 9a, 9b) of the component (4, 5, 6, 7, 9) formed of the modules (4a-7a, 9a, 9b) together form a frame with their reinforcements, the frame being subdivided into several sections, and on which frame the component respectively directly abutting on the component (4, 5, 6, 7, 9) formed of the modules (4a-7a, 9a, 9b) is supported.

2. Body according to Claim 1, **characterised in that** the component formed of the modules (4a-7a, 9a, 9b) directly abuts with a respective contact surface (18-21) of its modules (4a-7a, 9a, 9b) on a corresponding contact surface (18-21) of an adjacent component (4, 5, 6, 7, 9), and **in that** the two components (4, 5, 6, 7, 9) abutting on one another are firmly joined together exclusively in the area of the contact surfaces (18-21).

3. Body according to any one of the preceding claims, **characterised in that** at least two components (4, 5, 6, 7, 9) abutting on one another are in each case formed of at least two modules (4a-7a, 9a, 9b).

4. Body according to any one of the preceding claims, **characterised in that** each module (4a-7a, 9a, 9b) for reinforcement has a frame (15, 23) running around its periphery.

5. Body according to Claim 4, **characterised in that** on the free lateral narrow sides (17) of the frame (15) in each case a contact surface (18-21) is formed for attaching an adjacently arranged module (4a-7a, 9a, 9b) or an adjacently arranged component (4, 5, 6, 7, 9).

6. Body according to any one of the preceding claims, **characterised in that** a shaped element is formed in the contact surfaces (18-21) for joining the respective module (4a-7a, 9a, 9b) to an adjacently arranged module (4a-7a, 9a, 9b) or to an adjacently arranged component (4, 5, 6, 7, 9) in a form-locking manner.

7. Body according to any one of the preceding claims, **characterised in that** the respective component (4, 5, 6, 7, 9) is composed of at least three modules (4a-7a, 9a, 9b).

8. Body according to Claim 7, **characterised in that** at least one of the modules (4a-7a, 9a, 9b) has a length (Lm) which is measured in the longitudinal direction (L4, L5) of the respective component (4, 5, 6, 7, 9) and which differs from the length (Lm) of the other modules (4a-7a, 9a, 9b) of the respective component (4, 5, 6, 7, 9).

9. Body according to any one of the preceding claims, **characterised in that** at least one of the abutment lines (5e, 6e, 7e), on which the modules (4a-7a, 9a, 9b) of a component (4, 5, 6, 7, 9) abut one another, is arranged offset with respect to the abutment line (5e, 6e, 7e) of an adjoining component (4, 5, 6, 7, 9) closest adjacent to it.

10. Body according to any one of the preceding claims, **characterised in that** the join between the modules (4a-7a, 9a, 9b) of a component (4, 5, 6, 7, 9) is in each case formed in the same way.

11. Body according to any one of the preceding claims, **characterised in that** the join between the components (4, 5, 6, 7, 9) of the body (3) is formed in the same way at least in the area of the side-wall component (5, 6).

12. Body according to any one of the preceding claims, **characterised in that** the modules (4a-7a, 9a, 9b) are designed in the style of rectangular surface panels.

13. Body according to Claim 12, **characterised in that** the contact surfaces (18-21) of the modules (4a-7a, 9a, 9b) aligned transverse to the longitudinal direction (L4, L5) of the respective component (4, 5, 6, 7, 9) are in each case aligned at an angle deviating from 90° with respect to the longitudinal direction (L4, L5) of the respective component (4, 5, 6, 7, 9).

14. Body according to Claim 12 or 13, **characterised in that** the contact surfaces (18-21) of the modules (4a-7a, 9a, 9b) aligned parallel to the longitudinal direction (L4, L5) of the respective component (4, 5, 6, 7, 9) are in each case aligned at an angle deviating from 90° with respect to the transverse direction (Q) of the respective component (4, 5, 6, 7, 9).

15. Body according to any one of the preceding claims, **characterised in that** the butt joints or abutting edges, on which the components (4, 5, 6, 7, 9) butt against one another, are covered by a profile (31) produced from an elastic material.

16. Body according to Claim 15, **characterised in that** a profile (31) in each case extends over the entire length (Lg4, Lg5) of the respective component (4, 5, 6, 7, 9) .

## Revendications

1. Structure pour un véhicule utilitaire qui comprend au moins un composant (4, 5, 6, 7, 9), comme une paroi latérale (5, 6), une paroi frontale (4), un toit (7), une paroi arrière ou un fond (9), qui est formé par des modules (4a - 7a, 9a, 9b) préfabriqués séparément et reliés ensemble, sachant que
- chaque module (4a - 7a, 9a, 9b) porte, avec une face d'appui (18 - 21), directement contre une face d'appui d'un module (4a - 7a, 9a, 9b) voisin,
- les modules (4a - 7a, 9a, 9b) voisins sont reliés fixement les uns aux autres dans la zone de leurs faces d'appui (18 - 21) en contact direct, et que
- chaque module (4a - 7a, 9a, 9b) est raidi dans une zone voisine de sa face d'appui (18 - 21) concernée,
**caractérisée en ce que**
- les modules (4a - 7a, 9a, 9b) des composants (4, 5, 6, 7, 9) formés par les modules (4a - 7a, 9a, 9b) forment en commun, avec leurs raidissements, un cadre, divisé en plusieurs pièces, sur lequel s'appuient respectivement les composants directement voisins des composants (4, 5, 6, 7, 9) formés par les modules (4a - 7a, 9a, 9b).

2. Structure selon la revendication 1,
**caractérisée en ce que** les composants formés par les modules (4a - 7a, 9a, 9b) portent chacun, avec une face d'appui (18 - 21) respective de leurs modules (4a - 7a, 9a, 9b) directement contre une face d'appui (18 - 21) correspondante d'un composants (4, 5, 6, 7, 9) voisin et
**que** les deux composants (4, 5, 6, 7, 9) situés l'un à côte de l'autre, sont reliés fixement ensemble uniquement dans la zone des faces d'appui (18 - 21).

3. Structure selon l'une des revendications précédentes,
**caractérisée en ce qu'**au moins deux composants (4, 5, 6, 7, 9) adjacents sont constitués par aux moins deux modules (4a - 7a, 9a, 9b).

4. Structure selon l'une des revendications précédentes,
**caractérisée en ce que** chacun des modules (4a - 7a, 9a, 9b) est doté dans sa zone marginale d'un cadre périphérique (15, 23) en tant que raidissement.

5. Structure selon la revendication 4,
**caractérisée en ce que**, sur les côtés étroits, latéraux, libres (17) du cadre (15), est respectivement formée une face d'appui (18 - 21) pour l'adjonction d'un module (4a - 7a, 9a, 9b) adjacent ou d'un composants (4, 5, 6, 7, 9) adjacent.

6. Structure selon l'une des revendications précédentes,
**caractérisée en ce que**, dans les faces d'appui (18 - 21), est formé un élément façonné pour réaliser la liaison respective par engagement géométrique entre un module (4a - 7a, 9a, 9b) et un module (4a - 7a, 9a, 9b) adjacent, ou un composant (4, 5, 6, 7, 9) adjacent.

7. Structure selon l'une des revendications précédentes,
**caractérisée en ce que** chacun des composants (4, 5, 6, 7, 9) est composé d'au moins trois modules (4a - 7a, 9a, 9b).

8. Structure selon la revendication 7,
**caractérisée en ce que** l'un des modules (4a - 7a, 9a, 9b) au moins présente une longueur (Lm), qui, mesurée dans la direction longitudinale (L4, L5) des composants (4, 5, 6, 7, 9) respectifs, est différente de la longueur (Lm) des autres modules (4a - 7a, 9a, 9b) des composants (4, 5, 6, 7, 9) respectifs.

9. Structure selon l'une des revendications précédentes,
**caractérisée en ce que** la ligne de jonction (5e, 6e, 7e) au moins prévue, à laquelle les modules (4a - 7a, 9a, 9b) de l'un des composants (4, 5, 6, 7, 9) portent l'un contre l'autre, est décalée par rapport à la ligne de jonction (5e, 6e, 7e) la plus proche d'un composant (4, 5, 6, 7, 9) adjacent.

10. Structure selon l'une des revendications précédentes,
**caractérisée en ce que** la liaison entre les modules (4a - 7a, 9a, 9b) de l'un des composants (4, 5, 6, 7, 9) est chaque fois de même conception.

11. Structure selon l'une des revendications précédentes,
**caractérisée en ce que** la liaison entre les composants (4, 5, 6, 7, 9) de la structure (3) est de même conception, au moins dans la région des composants de paroi latérale (5, 6).

12. Structure selon l'une des revendications précédentes,
**caractérisée en ce que** les modules (4a - 7a, 9a, 9b) sont réalisés sous la forme de panneaux plats parallélépipédiques.

13. Structure selon la revendication 12,
**caractérisée en ce que** les faces d'appui (18 - 21) des modules (4a - 7a, 9a, 9b), orientées transversalement par rapport à la longueur (L4, L5) des composants (4, 5, 6, 7, 9) respectifs, forment un angle différent de 90 °, par rapport à la longueur (L4, L5) des composants (4, 5, 6, 7, 9) respectifs.

14. Structure selon revendication 12 ou 13,
**caractérisée en ce que** les faces d'appui (18 - 21) des modules (4a - 7a, 9a, 9b), orientées parallèlement à la longueur (L4, L5) des composants (4, 5, 6, 7, 9) respectifs, forment un angle différent de 90 °, par rapport à la direction transversale (Q) des composants (4, 5, 6, 7, 9) respectifs.

15. Structure selon l'une des revendications précédentes,
**caractérisée en ce que** les joints ou les bords de jonction, auxquels les composants (4, 5, 6, 7, 9) portent les uns contre les autres, sont recouverts par un profilé (31) fabriqué en matière élastique.

16. Structure selon la revendication 15,
**caractérisée en ce que**, sur la longueur totale (Lg4, Lg5) des composants respectifs (4, 5, 6, 7, 9), s'étend un profilé (31).
